# EUROPÄISCHE PATENTSCHRIFT

(11) **EP 1 585 612 B1**
(45) Veröffentlichungstag und Bekanntmachung des Hinweises auf die Patenterteilung: **17.05.2006**
(21) Anmeldenummer: 03750140.0
(22) Anmeldetag: 06.10.2003
(51) Int. Cl.: B23K 9/23, B23K 1/19

(54) **VERFAHREN ZUM FÜGEN ZWEIER BLECHE EINERSEITS AUS EINEM ALUMINIUMWERKSTOFF UND ANDERSEITS AUS EINEM EISEN- ODER TITANWERKSTOFF DURCH EINE SCHWEISS-LÖTVERBINDUNG**
METHOD FOR JOINING TWO METAL SHEETS RESPECTIVELY CONSISTING OF AN ALUMINIUM MATERIAL AND AN IRON OR TITANIUM MATERIAL BY MEANS OF A BRAZE WELDING JOINT
PROCEDE POUR JOINDRE PAR SOUDOBRASAGE DEUX TOLES COMPOSEES, D'UNE PART, D'UN MATERIAU A BASE D'ALUMINIUM ET, D'AUTRE PART, D'UN MATERIAU A BASE DE FER OU DE TITANE

(30) Priorität: 07.10.2002 AT 15142002; 19.05.2003 AT 7732003
(43) Veröffentlichungstag der Anmeldung: 19.10.2005
(73) Patentinhaber: Voestalpine Stahl GmbH, 4020 Linz (AT)
(72) Erfinder: SCHMARANZER, Christian, A-4072 Alkoven (AT); STELLNBERGER, Karl-Heinz, A-4491 Niederneukirchen (AT); LEITNER, Alois, A-4852 Weyregg am Attersee (AT)
(74) Vertreter: Hübscher, Helmut
(86) Internationale Anmeldenummer: PCT/AT2003/000298
(87) Internationale Veröffentlichungsnummer: WO 2004/030856

(56) Entgegenhaltungen:
- DE-A- 10 017 453
- GB-A- 964 743
- US-A- 3 341 680
- PATENT ABSTRACTS OF JAPAN vol. 007, no. 203 (M-241), 8. September 1983 (1983-09-08) & JP 58 100978 A (MITSUBISHI JUKOGYO KK), 15. Juni 1983 (1983-06-15)
- PATENT ABSTRACTS OF JAPAN vol. 2000, no. 04, 31. August 2000 (2000-08-31) & JP 2000 015448 A (NIPPON YUTEKU KK), 18. Januar 2000 (2000-01-18)

## Beschreibung

Die Erfindung bezieht sich auf ein Verfahren zum Fügen zweier Bleche einerseits aus einem Aluminiumwerkstoff und anderseits aus einem Eisen- oder Titanwerkstoff durch eine Schweiß-Lötverbindung unter Verwendung eines Zusatzwerkstoffes, wobei der Eisen- oder Titanwerkstoff zumindest im Fügebereich mit einer Beschichtung vorzugsweise auf Zink- oder Aluminiumbasis versehen wird, bevor der Zusatzwerkstoff zur Ausbildung einer Verbindungsnaht unter einem Schmelzen aufgebracht wird, siehe z.B. GB-A- 964 743.

### Stand der Technik

Beim thermischen Verbinden eines Aluminiumwerkstoffes mit einem Stahlwerkstoff wird der Aluminiumwerkstoff im Fügebereich aufgeschmolzen, so daß das schmelzflüssige Aluminium den Stahlwerkstoff benetzt und sich nach der Abkühlung eine stoffschlüssige Verbindung ergibt. Im Übergangsbereich zwischen den Werkstoffen werden allerdings spröde intermetallische Phasen gebildet, die die Belastbarkeit der Verbindung maßgebend mitbestimmen. Um die Dicke dieser intermetallischen Phasensäume klein zu halten, müssen die Diffusionsbedingungen im Übergangsbereich der Werkstoffe entsprechend beeinflußt werden, indem die Schmelzphase unter Einhaltung vergleichsweise großer Erwärmungs- und Kühlraten auf eine kurze Zeitspanne beschränkt wird.

Dies gelingt vorteilhaft, wenn die zu verbindenden Bleche in einem überlappenden Stoß angeordnet und im Überlappungsbereich vom Stahlwerkstoff her mit einem defokussierten Laserstrahl erwärmt werden. Die überlappten Verbindungsstöße bedingen allerdings eine örtlich höhere Steifigkeit für eine spätere Umformung der gefügten Bleche. Außerdem ist aufgrund der elektrochemischen Potentialdifferenz zwischen Stahl- und Aluminiumwerkstoffen mit einer hohen Korrosionsneigung im Bereich des Überlappungsstoßes zu rechnen, zumal im Überlappungsbereich nicht mit einem vollständigen Schließen der Trennfuge gerechnet werden kann, selbst wenn beim Aufschmelzen des Aluminiumwerkstoffes ein Zusatzwerkstoff auf Aluminiumbasis zugeführt wird. Ähnliche Schwierigkeiten ergeben sich beim Fügen von Blechen einerseits aus einem Aluminium- und anderseits aus einem Titanwerkstoff, weil auch bei dieser Werkstoffkombination ein spröder, intermetallischer Phasensaum auftritt.

Um das Auftreten spröder intermetallischer Phasen im Bereich einer Verbindungsnaht zwischen einem Stahl- und einem Aluminiumwerkstoff weitgehend zu vermeiden, ist es schließlich bekannt (DE 10 017 453 A1), den Stahlwerkstoff zumindest im Fügebereich mit einer Beschichtung auf Zink- oder Aluminiumbasis zu versehen, bevor ein Zusatzwerkstoff auf Zinkbasis zur Ausbildung einer Verbindungsnaht unter einem Schmelzen zwischen dem Stahl- und dem Aluminiumwerkstoff aufgetragen wird. Dieser Zusatzwerkstoff geht mit dem Aluminiumwerkstoff eine schmelzmetallurgische Schweißverbindung ein und dient als Lot für die Verbindung mit dem Stahlwerkstoff, wobei jedoch der Zusatzwerkstoff nicht in schmelzflüssigen Kontakt mit dem Stahlwerkstoff, sondern ausschließlich mit dem Beschichtungswerkstoff kommt, so daß aufgrund des gewählten Zusatzwerkstoffes auf Zinkbasis intermetallische Phasen weitgehend unterdrückt werden können. Nachteilig bei diesem bekannten Fügeverfahren ist allerdings, daß die durch den Zusatzwerkstoff gebildete Verbindungsnaht nur im Zwickelbereich zwischen zwei divergierenden Oberflächenbereichen der zu fügenden Werkstoffe vorgesehen werden kann und einen vom Aluminiumwerkstoff deutlich unterschiedlichen Zusatzwerkstoff auf Zinkbasis voraussetzt. Wird ein Zusatzwerkstoff auf Aluminiumbasis verwendet (US 3 202 793 A), so kann zwar dieser Nachteil vermieden werden, doch ist die Festigkeit dieser Schweiß-Lötverbindungen unzureichend, selbst wenn zur Verbesserung der Festigkeit das Eisenblech im Verbindungsbereich mit Durchbrüchen versehen wird, um über den durch diese Durchbrüche durchtretenden Zusatzwerkstoff eine verbesserte Bindung dieses Zusatzwerkstoffes mit dem Eisenblech zu erhalten.

### Darstellung der Erfindung

Der Erfindung liegt somit die Aufgabe zugrunde, ein Verfahren zum Fügen zweier stumpf stoßender Bleche einerseits aus einem Eisen- oder Titanwerkstoff und anderseits aus einem Aluminiumwerkstoff anzugeben, das eine allen Belastungsanforderungen genügende, dauerhafte Verbindung zwischen den Blechen unterschiedlicher Werkstoffe ermöglicht, ohne einen nicht auf Aluminiumbasis beruhenden Zusatzwerkstoff einsetzen zu müssen.

Ausgehend von einem Verfahren der eingangs geschilderten Art löst die Erfindung die gestellte Aufgabe dadurch, daß die beiden Bleche in Form eines stumpfen Stoßes gefügt werden, wobei der Zusatzwerkstoff auf Aluminiumbasis zur Ausbildung der Verbindungsnaht auf beiden Blechseiten in einem den Stoß überbrückenden Bereich auf das Blech aus dem Eisen- oder Titanwerkstoff in einer wenigstens der dreifachen Dicke dieses Bleches entsprechenden Breite aufgebracht wird.

Da zufolge dieser Maßnahmen der Zusatzwerkstoff auf Aluminiumbasis den Stoß zwischen den Blechen auf beiden Blechseiten überbrückt, deckt die durch diesen Zusatzwerkstoff gebildete Verbindungsnaht auf beiden Blechseiten einen Randbereich des Eisen- oder Titanwerkstoffes ab, was nicht nur die Fügefläche vergrößert, sondern auch eine wesentliche Voraussetzung dafür darstellt, daß im Stoßbereich keine Spaltkorrosion auftreten kann. Da außerdem die elektrochemische Potentialdifferenz zwischen der Beschichtung des Eisen- oder Titanwerkstoffes und dem Zusatzwerkstoff im Vergleich zur Potentialdifferenz zwischen dem Eisen- oder Titanwerkstoff und dem Aluminiumwerkstoff deutlich herabgesetzt ist, kann die Gefahr einer Kontaktkorrosion entscheidend reduziert werden. Durch die Beschichtung des Eisen- oder Titanwerkstoffes im Fügebereich wird außerdem die Neigung zur Bildung spröder, intermetallischer Phasen verringert. Zu diesem Zweck kann auch der Zusatzwerkstoff auf Aluminiumbasis in an sich bekannter Weise zur Steigerung der Festigkeit legiert werden, so daß sich für die erfindungsgemäße Verbindung eine hohe Belastungsfähigkeit ergibt, zumal über die den Stoß zwischen den beiden Blechen überbrückende Verbindungsnaht der tragende Querschnitt vergrößert wird.

Damit über die Verbindungsnaht eine allen Anforderungen genügende Festigkeit sichergestellt werden kann, muß die durch den Zusatzwerkstoff gebildete Verbindungsnaht den Rand des Bleches aus dem Eisen- oder Titanwerkstoff in einem entsprechenden Ausmaß beidseitig übergreifen. Wird der Zusatzwerkstoff auf das Blech aus dem Eisen- oder Titanwerkstoff in einer wenigstens der dreifachen Dicke dieses Bleches entsprechenden Breite aufgebracht, so können im Nahtbereich zumindest die Festigkeitswerte eingehalten werden, wie sie sich in den anschließenden Blechbereichen ergeben.

Um eine allmähliche Lastübernahme zwischen den unterschiedlichen Werkstoffen unter Vermeidung von übermäßigen Spannungsspitzen zu erreichen, kann das Blech aus dem Eisen- oder Titanwerkstoff vorteilhaft im Stoßbereich zumindest auf einer Blechseite mit einer Abschrägung versehen werden, so daß sich der tragende Querschnitt des Eisen- oder Titanwerkstoffes gegen den Aluminiumwerkstoff hin verringert, während der tragende Querschnitt des Aluminiumwerkstoffes entsprechend vergrößert wird. Diese Abschrägung muß aber wie der übrige Fügebereich mit einer Beschichtung auf Zink- , Zinn- oder Aluminiumbasis abgedeckt werden; um die werkstoffliche Anbindung zwischen dem Eisen- oder Titanwerkstoff und dem Zusatzwerkstoff zu gewährleisten. Die den Stoßbereich zwischen den Blechen überbrückende Verbindungsnaht durch den Zusatzwerkstoff bringt zwar eine Überhöhung des Stoßbereiches mit sich, doch spielt diese Überhöhung durch die beidseitige Verbindungsnaht beispielsweise für eine spätere Umformung der stumpf gefügten Bleche keine entscheidende Rolle. Unter Umständen kann die Verbindungsnaht auch durch eine plastische Verformung abgeflacht werden. Es ist außerdem möglich, die beiden Bleche so zu fügen, daß ihre Oberflächen auf einer Seite in einer gemeinsamen Ebene liegen, und nach dem Aufbringen der Verbindungsnaht im Nahtbereich um die jeweilige Dicke des Nahtüberstandes über die gemeinsame Oberfläche von dieser weg auszubiegen. Durch diese Maßnahme ergibt sich auf einer Seite eine sich stufenlos über die Verbindungsnaht durchgehende Oberfläche der gefügten Bleche.

Aufgrund der beidseitigen Abdeckung des Randbereiches des Eisen- oder Titanwerkstoffes durch die Verbindungsnaht beschränkt sich eine mögliche Spaltkorrosion auf den Übergangsbereich zwischen dem Längsrand der Verbindungsnaht auf der Seite des Eisen- oder Titanwerkstoffes und dessen Beschichtung. Weist der Beschichtungswerkstoff eine beschränkte Löslichkeit im Aluminium auf, so tritt unter Umständen die Gefahr auf, daß sich in diesem Übergangsbereich der Beschichtungswerkstoff im Zusatzwerkstoff auf Aluminiumbasis anreichert und einen Ausgangspunkt für einen Korrosionsangriff bildet. Um selbst diese geringe Gefahr in einfacher Weise abwenden zu können, kann die durch den Zusatzwerkstoff gebildete Verbindungsnaht zwischen den beiden Blechen zumindest auf einer Blechseite im Übergangsbereich zum beschichteten Eisen- oder Titanwerkstoff durch eine Korrosionsschutzschicht, insbesondere eine Lackschicht abgedeckt werden.

Blechzuschnitte einerseits aus einem Eisen- oder Titanwerkstoff und anderseits aus einem Aluminiumwerkstoff, die mit Hilfe einer erfindungsgemäßen Schweißnaht gefügt werden, können auch im Bereich der Verbindungsnähte umgeformt werden, ohne die Verbindungsnaht zu überlasten, was eine einfache Herstellung von Werkstücken aus solchen Blechzuschnitten erlaubt, weil die Blechzuschnitte vor einer Kaltverformung gefügt und dann gemeinsam durch die Kaltverformung zum Werkstück umgeformt werden. Voraussetzung hierfür ist, daß über die Schweiß-Lötverbindung die erforderlichen Kräfte übertragen werden können, um die gefügten Blechzuschnitte plastifizieren und dadurch umformen zu können. Dies gelingt dadurch, daß die Verbindungsnaht auf der Seite des Blechzuschnittes aus dem Eisen- oder Titanwerkstoff in einer Breite aufgebracht wird, die zumindest der dreifachen Dicke dieses Blechzuschnittes entspricht. Diese mit wenig Aufwand erfüllbare Bedingung gewährleistet, daß die für die Belastbarkeit der Verbindungsnaht kritischen Normalspannungen im Bereich der Lötzone zwischen dem Zusatzwerkstoff auf Aluminiumbasis und dem Blechzuschnitt aus dem Eisen- oder Titanwerkstoff selbst bei einer plastischen Umformung der gefügten Blechzuschnitte in einem zulässigen Bereich bleiben, weil eben die Fügefläche entsprechend vergrößert wird.

Die den Stoßbereich zwischen den Blechzuschnitten überbrückende Verbindungsnaht aus dem Zusatzwerkstoff bringt zwar eine Überhöhung des Stoßbereiches mit sich, doch spielt diese Überhöhung durch die beidseitige Verbindungsnaht für die spätere Umformung der stumpfgefügten Blechzuschnitte keine entscheidende Rolle, weil die Nahtüberhöhungen beispielsweise durch entsprechenden Aussparungen im Formwerkzeug berücksichtigt werden können. Zur Verringerung der Nahtüberhöhungen kann aber auch die durch den Zusatzwerkstoff gebildete Verbindungsnaht zwischen den beiden Blechzuschnitten vor der gemeinsamen Kaltverformung der gefügten Blechzuschnitte abgeflacht werden.

### Kurze Beschreibung der Zeichnung

Anhand der Zeichnung wird das erfindungsgemäße Verfahren näher erläutert.
Es zeigen:
- Fig. 1: zwei nach dem erfindungsgemäßen Verfahren gefügte Blechzuschnitte einerseits aus einem Stahl- und anderseits aus einem Aluminiumwerkstoff in einer Draufsicht,
- Fig. 2: einen Schnitt durch die Verbindungsnaht zwischen den stumpfstoßenden Blechzuschnitten in einem Schnitt nach der Linie II-II der Fig. 1 in einem größeren Maßstab,
- Fig. 3: eine der Fig. 2 entsprechende Darstellung mit einer durch ein plastisches Verformen abgeflachten Verbindungsnaht,
- Fig. 4: eine ebenfalls der Fig. 2 entsprechende Darstellung einer Konstruktionsvariante einer erfindungsgemäß hergestellten Verbindungsnaht,
- Fig. 5: eine der Fig. 4 entsprechende Verbindungsnaht, jedoch nach einer zusätzlichen Umformung und
- Fig. 6: das durch eine Kaltverformung aus den gefügten Blechzuschnitten nach der Fig. 1 hergestellte Werkstück in einem vereinfachten Schaubild in einem größeren Maßstab.

### Weg zur Ausführung der Erfindung

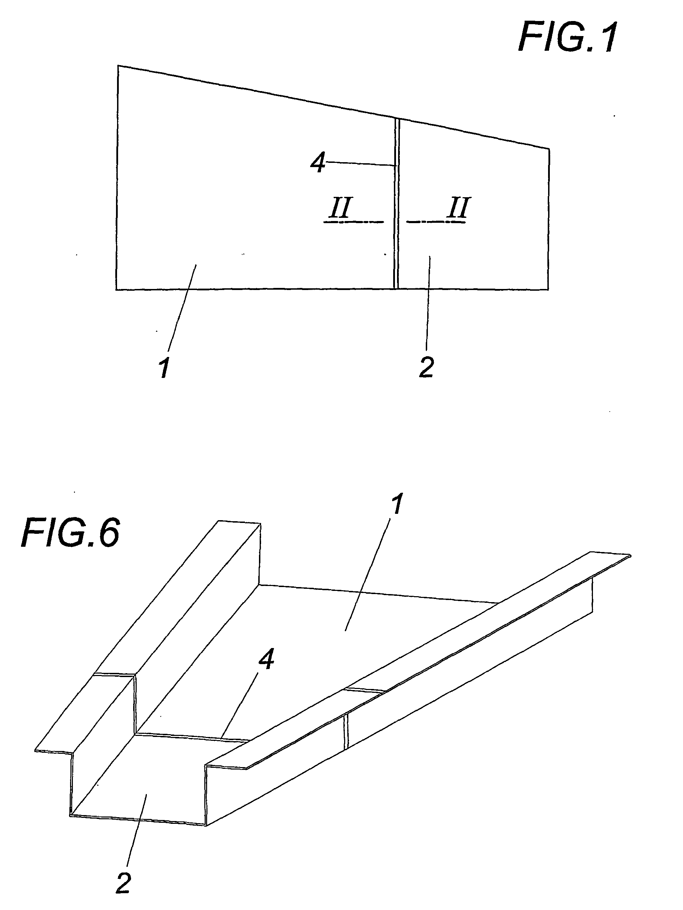

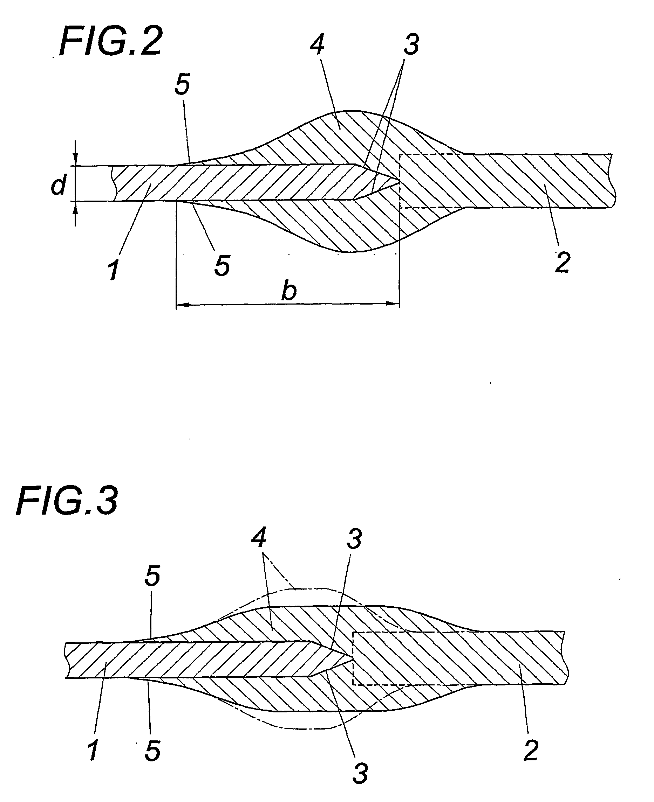

Um das in der Fig. 6 veranschaulichte Werkstück, beispielsweise einen Profilträger, aus einem kaltverformten Blechzuschnitt 1 aus einem Eisenwerkstoff und einem ebenfalls kaltverformten Blechzuschnitt 2 aus einem Aluminiumwerkstoff herstellen zu können, wird von ebenen Blechzuschnitten 1 und 2 ausgegangen, wie sie in der Fig. 1 angedeutet sind. Diese Blechzuschnitte 1 und 2 werden stumpfstoßend gefügt. Zu diesem Zweck wird der Blechzuschnitt 1 aus dem Eisenwerkstoff im Bereich des die Stoßstelle bildenden Randes mit beidseitigen Abschrägungen 3 versehen, wie dies der Fig. 2 entnommen werden kann. Diese Abschrägungen 3 weisen wie die übrigen Flächen des Fügebereiches eine Beschichtung vorzugsweise auf Zinkbasis auf. Nach einem Zusammenführen der zu fügenden Blechzuschnitte 1 und 2 wird im Stoßbereich ein Zusatzwerkstoff auf Aluminiumbasis auf beiden Seiten der Zuschnitte 1 und 2 aufgebracht und mit Hilfe eines Lichtbogens geschmolzen, wobei sich zwischen dem Aluminiumwerkstoff des Blechzuschnittes 2 und dem die Verbindungsnaht 4 bildenden Zusatzwerkstoff auf Aluminiumbasis eine schmelzmetallurgische Schweißverbindung ergibt. Diese durch ein Aufschmelzen des Aluminiumwerkstoffes erhaltene Schweißverbindung ist durch eine einheitliche Schraffur des Blechzuschnittes 2 und der Verbindungsnaht 4 veranschaulicht, wobei der ursprüngliche Rand des Blechzuschnittes 2 strichliert angedeutet wurde. Der schmelzflüssige Zusatzwerkstoff stellt für die Anbindung an den Blechzuschnitt 1 aus dem Eisenwerkstoff ein Lot dar, das allerdings nicht nur im unmittelbaren Stoßbereich der beiden Blechzuschnitte 1 und 2 aufgetragen wird, sondern den Stoß überbrückt und den Rand des Blechzuschnittes 1 aus dem Eisenwerkstoff beidseitig übergreift. Der das Lot bildende Zusatzwerkstoff wird dabei in einem Überdeckungsbereich aufgebracht, der eine wenigstens der dreifachen Dicke d entsprechende Breite b aufweist. Durch die damit verbundene Vergrößerung der Anbindungslänge werden einerseits die für die Belastbarkeit der Verbindungsnaht mitentscheidenden Normalspannungen im Bereich der Lötzone auf ein zulässiges Maß beschränkt und anderseits korrosionsbedingte Festigkeitsverluste der Verbindung durch entsprechend lange Korrosionswege unter den korrosionsbedingten Festigkeitsverlusten des schwächeren Grundwerkstoffes der gefügten Blechzuschnitte 1, 2 gehalten, so daß über die gesamte Lebensdauer des Werkstückes der Fügebereich Festigkeitswerte aufweist, die zumindest den Festigkeitswerten des schwächeren der beiden Blechzuschnitte 1, 2 entsprechen.

Nach dem Herstellen der Verbindungsnaht 4 können die gefügten Blechzuschnitte 1 und 2 mit einer Korrosionsschutzschicht versehen werden. Zu diesem Zweck können die Blechzuschnitte 1, 2 in herkömmlicher Weise einer Tauchlackierung unterzogen werden, wobei der Übergangsbereich 5 zwischen der Verbindungsnaht 4 und dem beschichteten Blechzuschnitt 1 aus dem Stahlwerkstoff durch die Lackschicht mit dem Vorteil abgedeckt wird, daß in diesem Übergangsbereich 5 keine Korrosion auftreten kann, die sich mit der Zeit gegen den unmittelbaren Stoßbereich hin fortpflanzen könnte.

Da zur gegenseitigen Anpassung der Eigenfestigkeiten die Dicke des Blechzuschnittes aus dem Aluminiumwerkstoff größer als die Dicke d des Blechzuschnittes 1 aus dem Stahlwerkstoff gewählt wird, kann sich durch die Verbindungsnaht 4 eine entsprechende Überhöhung der Verbindungsstelle zwischen den beiden Blechzuschnitten 1 und 2 ergeben. Um diese Überhöhung ohne Gefährdung der Verbindung zwischen den beiden Blechzuschnitten 1 und 2 zu beschränken, kann gemäß der Fig. 3 die in ihrer ursprünglichen Form strichpunktiert angedeutete Verbindungsnaht 4 durch eine plastische Verformung abgeflacht werden, wie dies in vollen Linien dargestellt ist.

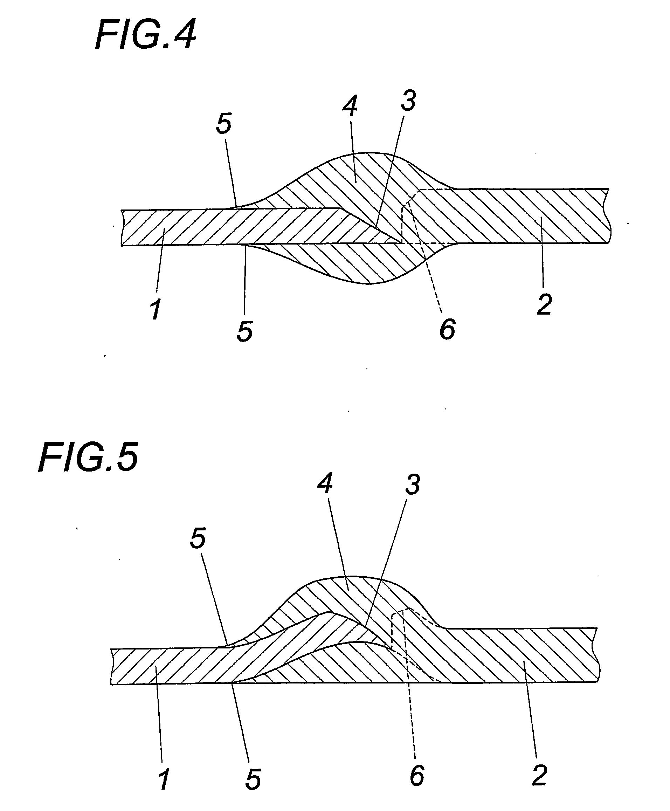

Die in den Fig. 2 und 3 dargestellte symmetrische Anordnung der Blechzuschnitte 1 und 2 ist keinesfalls für die erfindungsgemäße Herstellung einer Verbindungsnaht 4 erforderlich. So könnten beispielsweise die Oberflächen der Blechzuschnitte 1 und 2 auf einer Seite in einer gemeinsamen Ebene liegen, wie dies in der Fig. 4 gezeigt wird. Mit einer solchen Anordnung ergibt sich eine unterschiedlich geformte Verbindungsnaht 4, ohne daß die grundsätzlichen Verhältnisse geändert werden. Da es im Ausführungsbeispiel nach der Fig. 4 wenig Sinn macht, den Rand des Blechzuschnittes 1 auch auf der mit dem Blechzuschnitt 2 fluchtenden Oberflächenseite mit einer Abschrägung zu versehen, wird nur die gegenüberliegende Seite des Blechrandes mit einer Abschrägung 3 angearbeitet. In diesem Fall empfiehlt sich auch eine Anfasung 6 des Blechzuschnittes 2 aus dem Aluminiumwerkstoff, um eine vorteilhafte Nahtausbildung sicherzustellen. Zusätzlich kann gemäß der Fig. 5 der Nahtbereich so verformt werden, daß sich auf der einen Blechseite eine über die Verbindungsnaht 4 stufenlos durchgehende, gemeinsame Oberfläche ergibt. Dies wird dann erreicht, wenn die Blechzuschnitte im Nahtbereich um die jeweilige Dicke des Nahtüberstandes über die gemeinsame Oberfläche von dieser weg ausgebogen werden, wie dies der Fig. 5 entnommen werden kann.

Die Blechzuschnitte 1 und 2 werden nach dem Fügen durch eine Schweiß-Lötverbindung gemeinsam zum Werkstück gemäß der Fig. 6 umgeformt, beispielsweise durch ein Biegen oder ein Tiefziehen. Die für die plastische Verformung der Blechzuschnitte 1 und 2 erforderlichen Kräfte können bei diesen Kaltverformungen über die Verbindungsnaht 4 ohne weiteres übertragen werden. Die Überhöhung durch die Verbindungsnaht 4 kann beim plastischen Umformen der gefügten, zunächst ebenen Blechzuschnitte 1, 2 durch eine entsprechende Ausbildung der Werkzeuge berücksichtigt werden, beispielsweise durch Aussparungen im Bereich der Verbindungsnaht 4. Die Überhöhung kann aber auch durch eine plastische Verformung gemäß der Fig. 3 abgeflacht werden.

Die Erfindung ist selbstverständlich nicht auf das dargestellte Ausführungsbeispiel beschränkt. So kann anstelle eines Blechzuschnittes 1 aus einem Eisenwerkstoff ein Zuschnitt aus einem Titanwerkstoff eingesetzt werden, der in vergleichbarer Weise durch ein Schweißlöten korrosionsfest über einen Zusatzwerkstoff auf Aluminiumbasis mit einem Aluminiumwerkstoff verbunden werden kann, wenn die erfindungsgemäße Parameter eingehalten werden.

## Patentansprüche

1. Verfahren zum Fügen zweier Bleche einerseits aus einem Aluminiumwerkstoff und anderseits aus einem Eisen- oder Titanwerkstoff durch eine Schweiß-Lötverbindung unter Verwendung eines Zusatzwerkstoffes, wobei der Eisen- oder Titanwerkstoff zumindest im Fügebereich mit einer Beschichtung vorzugsweise auf Zink- oder Aluminiumbasis versehen wird, bevor der Zusatzwerkstoff zur Ausbildung einer Verbindungsnaht unter einem Schmelzen aufgebracht wird, **dadurch gekennzeichnet, daß** die beiden Bleche in Form eines stumpfen Stoßes gefügt werden, wobei der Zusatzwerkstoff auf Aluminiumbasis zur Ausbildung der Verbindungsnaht auf beiden Blechseiten in einem den Stoß überbrückenden Bereich auf das Blech aus dem Eisen- oder Titanwerkstoff in einer wenigstens der dreifachen Dicke dieses Bleches entsprechenden Breite aufgebracht wird.

2. Verfahren nach Anspruch 1, **dadurch gekennzeichnet, daß** das Blech aus dem Eisen- oder Titanwerkstoff vor dem Aufbringen der Beschichtung im Stoßbereich zumindest auf einer Blechseite mit einer Abschrägung versehen wird.

3. Verfahren nach einem der Ansprüche 1 oder 2, **dadurch gekennzeichnet, daß** die durch den Zusatzwerkstoff gebildete Verbindungsnaht zwischen den beiden Blechen nach dem Auftragen des Zusatzwerkstoffes durch eine plastische Verformung abgeflacht wird.

4. Vertanren nach Anspruch 1 oder 2, **dadurch gekennzeichnet, daß** die beiden Bleche mit auf einer Seite in einer gemeinsamen Ebene liegenden Oberfläche gefügt und nach dem Aufbringen der Verbindungsnaht im Nahtbereich um die jeweilige Dicke des Nahtüberstandes über die gemeinsame Oberfläche von dieser weg ausgebogen werden.

5. Verfahren nach einem der Ansprüche 1 bis 4, **dadurch gekennzeichnet, daß** die durch den Zusatzwerkstoff gebildete Verbindungsnaht zwischen den beiden Blechen zumindest auf einer Blechseite im Übergangsbereich zum beschichteten Eisen- oder Titanwerkstoff durch eine Korrosionsschutzschicht, insbesondere eine Lackschicht, abgedeckt wird.

6. Verfahren zum Herstellen eines Werkstückes aus gefügten, kaltverformten Blechzuschnitten einerseits aus einem Aluminiumwerkstoff und anderseits aus einem Eisen- oder Titanwerkstoff, **dadurch gekennzeichnet, daß** die Blechzuschnitte vor einer gemeinsamen Kaltverformung durch eine Schweiß-Lötverbindung in Form eines stumpfen Stoßes unter Verwendung eines Zusatzwerkstoffes auf Aluminiumbasis gefügt werden, der zur Ausbildung der Verbindungsnaht auf beiden Seiten des Blechzuschnittes aus dem Eisen- oder Titanwerkstoff unter einem Schmelzen auf einer Beschichtung des Eisen- oder Titanwerkstoffes in einer zumindest der dreifachen Dicke dieses Blechzuschnittes entsprechenden Breite aufgebracht wird.

7. Verfahren nach Anspruch 6, **dadurch gekennzeichnet, daß** die durch den Zusatzwerkstoff gebildete Verbindungsnaht zwischen den beiden Blechzuschnitten vor der gemeinsamen Kaltverformung der gefügten Blechzuschnitte abgeflacht wird.

## Claims

1. Method for joining two metal sheets, one being made of an aluminium material and the other being made of an iron or titanium material, through a welded / soldered joint using an additional material, wherein the iron or titanium material is provided at least in the joint region with a coating preferably on a zinc or aluminium base before the material for forming a joint seam is applied through melting, **characterised in that** the two metal sheets are joined in the form of a butt joint, wherein the additional material on an aluminium base for forming the joint seam on both metal sheet sides in a region bridging over the abutment is applied to the metal sheet made of the iron or titanium material in a breadth corresponding to at least three times the thickness of this metal sheet.

2. Method according to claim 1, **characterised in that** the metal sheet made of the iron or titanium material is provided, before the application of the coating, in the abutment region on at least one metal sheet side with a chamfer.

3. Method according to one of the claims 1 or 2, **characterised in that** the joint seam formed by the additional substance between the two metal sheets, after the application of the additional material, is flattened by plastic deformation.

4. Method according to claim 1 or 2, **characterised in that** the two metal sheets are joined with their surfaces lying in a common plane on one side and, after the application of the joint seam in the seam region, are bent out by the respective thickness of the seam overhang over the common surface away from this.

5. Method according to one of the claims 1 to 4, **characterised in that** the joint seam between the two metal sheets formed by the additional substance is covered on at least one metal sheet side in the transition area to the coated iron or titanium material by an anti-corrosion layer, particularly a layer of paint.

6. Method for producing a workpiece from joined, cold- worked metal sheet sections, one being made of an aluminium material and the other being made of an iron or titanium material, **characterised in that** the metal sheet sections are joined, before common cold-working, by a welded / soldered joint in the form of a butt joint using an additional material on an aluminium base which is applied for the formation of the joint seam on both sides of the metal sheet section made of the iron or titanium material, with melting, on a coating of the iron or titanium material in a breadth corresponding to at least three times the thickness of this sheet section.

7. Method according to claim 6, **characterised in that** the joint seam formed by the additional material between the two metal sheet sections is flattened before the common cold-working of the joined metal sheet sections.

## Revendications

1. Procédé pour joindre deux tôles, d'une part, en un matériau à base d'aluminium et, d'autre part, en un matériau à base de fer ou de titane, au moyen d'une liaison par soudobrasage avec utilisation d'un matériau additif, matériau à base de fer ou de titane, au moins dans la zone de joint, étant muni d'un revêtement, de préférence à base de zinc ou d'aluminium, avant que le matériau additif soit appliqué avec fusion pour former un cordon de liaison, **caractérisé en ce que** les deux tôles sont jointes sous la forme d'un joint droit, le matériau additif à base d'aluminium pour former le cordon de liaison étant appliqué sur les deux faces de tôle, dans une zone pontant le joint, sur la tôle en matériau à base de fer ou de citane, en une largeur correspondant à peu près au triple de l'épaisseur de cette tôle.

2. Procédé selon la revendication 1, **caractérisé en ce que** la tôle en matériau à base de fer ou de titane, avant application du revêtement, est munie dans la zone de joint, au moins sur une face de tôle, d'un chanfrein.

3. Procédé selon l'une des revendications L ou 2, **caractérisé en ce que** le cordon de liaison formé par le matériau additif entre les deux tôles, après application du matériau additif, est applati en procédant à une déformation plastique.

4. Procédé selon la revendication 1 ou 2, **caractérisé en ce que** les deux tôles sont jointes, avec une surface située dans un plan commun sur un côté et, après application du cordon de liaison, sont bombées dans la zone de cordon, sur la surface commune, en s'écartant de celle-ci, l'écart étant de la valeur de l'épaisseur respertive de la surépaisseur de cordon.

5. Procédé selon l'une des revendications 1 à 4, **caractérisé en ce que** le cordon de liaison, formé par le matériau additif entre les deux tôles, est recouvert au moins sur une face de tôle, dans la zone de transition par rapport au matériau à base de fer ou de titane revêtu, par une couche de protection contre la corrosion, en particulier une couche de vernis.

6. Procédé de fabrication d'une pièce d'oeuvre en flans en tôle joints déformés à froid, d'une part, à partir d'un matériau à base d'aluminium et, d'autre part, d'un matériau à base de fer ou de titane, **caractérisé en ce que** les flans de tôle, avant une déformation à froid commune, sont joints par une liaison par soudobrasage, à la forme d'un joint droit, en utilisant un matériau additif qui est appliqué pour former le cordon de liaison sur les deux côtés du flan en tôle, réalisé en matériau à base de fer ou de titane, avec fusion, sur un revêtement du matériau à base de fer ou de titane, en une largeur correspondant au moins au triple de l'épaisseur de ce flan en tôle.

7. Procédé selon 1a revendication 6, **caractérisé en** de que le cordon de liaison, formé par le matériau additif entre les deux flans en tôle, est aplati avant la déformation à froid commune des flans en tôle joints.
